# EUROPÄISCHE PATENTANMELDUNG

(11) **EP 1 081 485 A1**
(43) Veröffentlichungstag der Anmeldung: **07.03.2001**
(21) Anmeldenummer: 00117440.8
(22) Anmeldetag: 11.08.2000
(51) Int. Cl.: G01M 17/10

(54) **Prüfeinrichtung für Schienenräder**

(30) Priorität: 20.08.1999 DE 29914616 U
(71) Anmelder: SIEMENS AKTIENGESELLSCHAFT, 80333 München (DE)
(72) Erfinder: Knieper, Günter, Dipl.-Ing., 48499 Salzbergen (DE); Kroll, Manfred, Dipl.-Ing., 91058 Erlangen (DE); Meier, Rainer, Dipl.-Ing., 91058 Erlangen (DE)

(57) **Zusammenfassung**

Die Prüfeinrichtung umfaßt einen Schlitten, der unter einem zu prüfenden Schienenfahrzeug verschiebbar ist und der eine Radfreidreheinrichtung aufweist, sowie wenigstens ein Prüfsystem mit einer vorgebbaren Anzahl von Prüfsonden, die als Sender von Prüfsignalen und/oder als Empfänger von Meßsignalen ausgebildet sind, wobei zumindest eine Prüfsonde wenigstens einer Oberfläche des Schienenrades meßtechnisch zugeordnet ist, und wenigstens einen Leistungsverstärker zur Erzeugung der Prüfsignale und eine Auswerteeinheit, der die Meßsignale zur Auswertung zuführbar sind.

## Beschreibung

Die Erfindung betrifft eine Prüfeinrichtung für Schienenräder.

Räder von Schienenfahrzeugen, insbesondere von Hochgeschwindigkeitsschienenfahrzeugen, werden in bestimmten Zeitabständen einer Radsatzdiagnose unterzogen. Die Radsatzdiagnose umfaßt eine Ultraschallprüfung, ein Lichtschnittverfahren und eine Meßbalkenprüfung. Diese drei Prüfkomponenten beschreiben aber lediglich den Zustand der Oberfläche im Laufflächenbereich des Schienenrades hinsichtlich Oberflächenfehler, Profilabweichungen und Unrundheit.

Die Ultraschallkomponente arbeitet mit elektrodynamischer Ankopplung und der Einleitung einer Oberflächenwelle (Rayleigh-Welle) in das Schienenrad, welches das Prüfobjekt darstellt. Diese Oberflächenwellen haben eine sehr gering Eindringtiefe in das Material und zeigen eine große Abhängigkeit von der Oberflächenbeschaffenheit des Prüfobjektes. Da das Schienenfahrzeug mit sehr niedriger Geschwindigkeit über die feststehende Meßeinrichtung bewegt wird, ermöglicht das Lichtschnittverfahren lediglich eine Momentaufnahme, ähnlich einem Stroboskop. Im Falle der Meßbalkenprüfung, die der Unrundheitsmessung der Schienenräder dient, wird im bekannten Fall der Umfang des Schienenrades 1 als Abwicklung über einem Messbalken von ca. 3 bis 3,5 m Länge abgebildet und Durchmesserschwankungen mechanisch aus der Auslenkung des Meßbalkens ermittelt.

Mit Ausnahme dieser Prüfungen und den entsprechenden visuellen Kontrollen gemäß den Fristenplänen gab es bis zum Unfall von Eschede keine automatische Volumenprüfung des Radkranzes, des Übergangs Radkranz/Radscheibe und der Radscheibe selbst. Im Anschluß an den Unfall von Eschede wurden die Prüfanforderungen ausgeweitet und bis heute eine stationäre Ultraschallprüfeinrichtung für die Vollvolumenprüfung der Radsätze eingerichtet, in der die Radsätze der Laufdrehgestelle im ausgebauten Zustand einer vollvolumenetrischen Ultraschallprüfung unterzogen werden. Die Radsätze der Triebdrehgestelle können in diesen Anlagen ohne aufwendige Demontage der Antriebsaggregate nicht geprüft werden. Eine Prüfung ohne Demontage der Antriebsaggregate ist heute nur durch eine konventionelle Ultraschallprüfung von Hand möglich.

Aufgabe der vorliegenden Erfindung ist es, eine Prüfeinrichtung für Schienenräder zu schaffen, die eine vollvolumenetrische Prüfung der Schienenräder ohne deren Ausbau und ohne Beeinträchtigung anderer Instandhaltungsarbeiten am Schienenfahrzeug ermöglicht.

Die Aufgabe wird erfindungsgemäß durch die Merkmale im Anspruch 1 gelöst. Vorteilhafte Ausgestaltungen der Erfindung sind Gegenstand von weiteren Ansprüchen.

Die Prüfeinrichtung nach Anspruch 1 umfaßt folgende Merkmale:
a) Einen Schlitten, der unter einem zu prüfenden Schienenfahrzeug verschiebbar ist und der eine Radfreidreheinrichtung aufweist,
b) wenigstens ein Prüfsystem mit einer vorgebbaren Anzahl von Prüfsonden, die als Sender von Prüfsignalen und/oder als Empfänger von Meßsignalen ausgebildet sind, wobei zumindest eine Prüfsonde wenigstens einer Oberfläche des Schienenrades meßtechnisch zugeordnet ist,
c) wenigstens eine Leistungsverstärkereinheit zur Erzeugung der Prüfsignale und
d) wenigstens eine Auswerteeinheit, der die Meßsignale zur Auswertung zuführbar sind.

Mit der erfindungsgemäßen Prüfeinrichtung kann die Prüfung der Schienenräder im Rahmen der Wartung bzw. Instandhaltung parallel zu allen anderen geplanten Tätigkeiten ausgeführt werden, ohne diese zu beeinträchtigen. Die Prüfeinrichtung gemäß Anspruch 1 kann z. B. an jedem von einer Grube aus zugänglichen Radsatz im eingebauten Zustand eingesetzt werden.

Die Prüfung der Schienenräder erfolgt im wesentlichen von der Lauffläche des Rades und von der Stirnseite des Radkranzes aus und kann einige Prüfspuren in Umfangsrichtung im Bereich des Laufkreisdurchmessers beinhalten.

Der Schlitten, wird in der Grube unter dem Zug eingesetzt, und unter dem zu prüfenden Schienenfahrzeug verschoben. Von der Radfreidreheinrichtung werden die zu prüfenden Schienenräder angehoben und gegenüber dem fest positionierten Prüfsystem gedreht. An dem sich drehenden Schienenrad nehmen die Prüfsonden damit eine genaue, reproduzierbare geometrische Position ein, so daß eine Prüfung am kompletten Radumfang realisiert werden kann. Die Schienenräder bzw. Radsätze müssen nicht ausgebaut werden, auch eine Demontage von Antriebsaggregaten oder von am Schienenrad montierten Bremsscheiben ist nicht erforderlich. Damit ergibt sich eine erhebliche Zeitersparnis beim Prüfen der Schienenräder.

Im Rahmen der Erfindung kann die Prüfeinrichtung für eine Ultraschallprüfung und/oder eine optische Prüfung und/oder eine induktive Prüfung des Schienenrades ausgebildet sein (Ansprüche 2 bis 4).

Die Prüfung des Schienenrades umfaßt mindestens den Bereich des Radkranzes, den Übergang zwischen Radkranz zu Radscheibe und den Bereich der Radscheibe bis zum Übergang Radscheibe zu Nabe. Bei am Schienenrad montierten Bremsscheiben liegen im Bereich der Radscheibe die Bohrungen zur Aufnahme der Schraubenverbindung der beiden an der Radscheibe befestigten Bremsscheiben. Weiterhin können in diesem Bereich Bohrungen für kraftschlüssige Verbindungen zwischen Radscheibe und Antriebseinheit angeordnet sein. Die bevorzugt nachzuweisende Fehlerorientierung ist der rißartige Fehler, der von einer Bohrung in der Radscheibe ausgeht und im schlimmsten Fall bis zur nächsten Bohrung oder radial nach außen verlaufen kann.

Zwei Ausführungsbeispiele der Erfindung werden nachfolgend anhand der Zeichnung näher erläutert. Es zeigen:
- FIG 1: eine Anordnung von Prüfsonden zur Ultraschallprüfung einer Radscheibe,
- FIG 2: eine Anordnung einer Prüfsonde zur Ultraschallprüfung eines Radkranzes im Bereich seiner Stirnseiten,
- FIG 3: eine Anordnung einer Prüfsonde zur Ultraschallprüfung eines Radkranzes in seinen äußeren Bereichen.

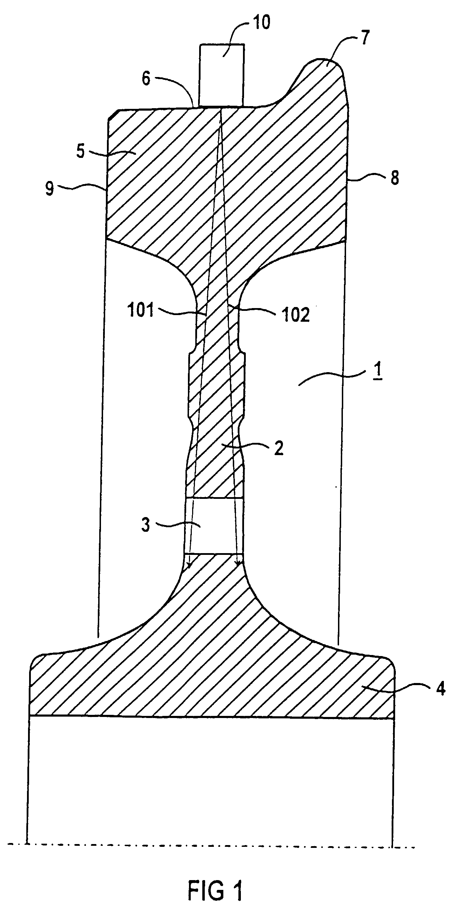

In den FIG 1 bis 3 ist mit 1 jeweils ein im Halbschnitt dargestelltes Schienenrad bezeichnet, dessen Radscheibe 2 Bohrungen 3 zur Befestigung einer in den FIG 1 bis 3 nicht dargestellten Scheibenbremse aufweist. In den FIG 1 bis 3 ist aufgrund der Darstellung im Halbschnitt nur eine Bohrung 3 sichtbar. Das Schienenrad 1 ist mit seiner Nabe 4 auf eine in den FIG 1 bis 3 nicht gezeigte Achse aufgepreßt. Radial nach außen schließt sich ein Radkranz 5 an. Der Radkranz 5 weist eine Lauffläche 6 und einen Spurkranz 7 auf. Die am Spurkranz 7 liegende Stirnfläche wird im folgenden als innere Stirnfläche 8 bezeichnet. Bei der gegenüberliegenden Stirnfläche handelt es sich um die äußere Stirnfläche 9.

Gemäß einer ersten Variante werden mit je zwei Ultraschall-Prüfsonden 10 beide Schienenräder 1 eines Radpaares (beispielsweise eines Radsatzes) simultan in einem Durchgang geprüft. Es handelt sich hierbei um eine Ultraschallprüfung der Radscheibe 2 auf Fehler in Umfangsrichtung. Die hierzu für beide Schienenräder 1 erforderliche Anordnung ist in FIG 1 dargestellt. In FIG 1, welche die Anordnung bei einem Schienenrad 1 zeigt, ist aufgrund der Darstellung im Halbschnitt nur eine der beiden Ultraschall-Prüfsonden 10 sichtbar. Die zweite Ultraschall-Prüfsonde ist jeweils in einem vorgebbaren Bogenmaß gegenüber der Ultraschall-Prüfsonde 10 angeordnet, so daß die Radscheibe 2 V-förmig durchschallt wird. Die Schallfeldgeometrie der Ultraschall-Prüfsonde 10 ist durch die beiden Pfeile 101 und 102 schematisch gekennzeichnet.

Bei einer zweiten vorteilhaften Variante wird die Ultraschallprüfung der Radscheibe 2 auf Fehler in Umfangsrichtung nur an einem Schienenrad 1 eines Radpaares vorgenommen. Die Anordnung der Ultraschall-Prüfsonden entspricht der in FIG 1 dargestellten Anordnung (V-Durchschallung in einem vorgebbaren Bogenmaß). Gleichzeitig mit dieser Prüfung wird mit zwei weiteren Ultraschall-Prüfsonden 11 und 12 die Prüfung des Radkranzes 5 dieses Schienenrades 1 auf Querfehler in den kritischen Bereichen durchgeführt. Bei beiden Varianten wird also eine identische vollvolumenetrische Prüftechnik für den Bereich der Radscheibe 2 angewandt.

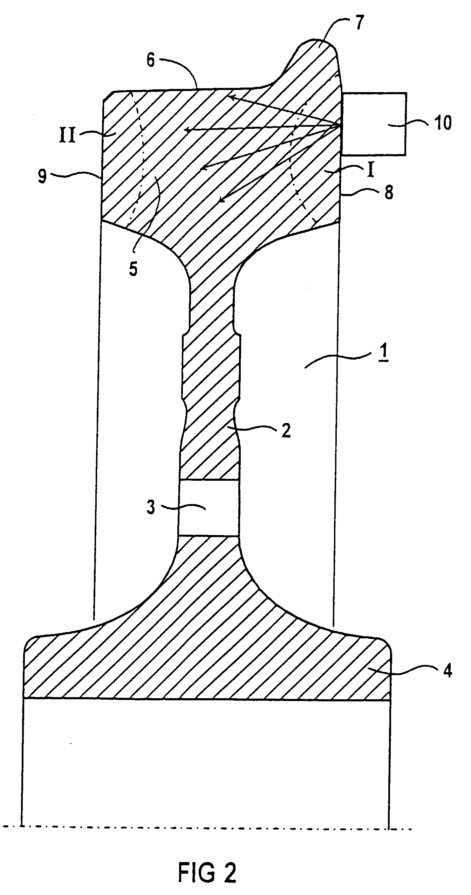

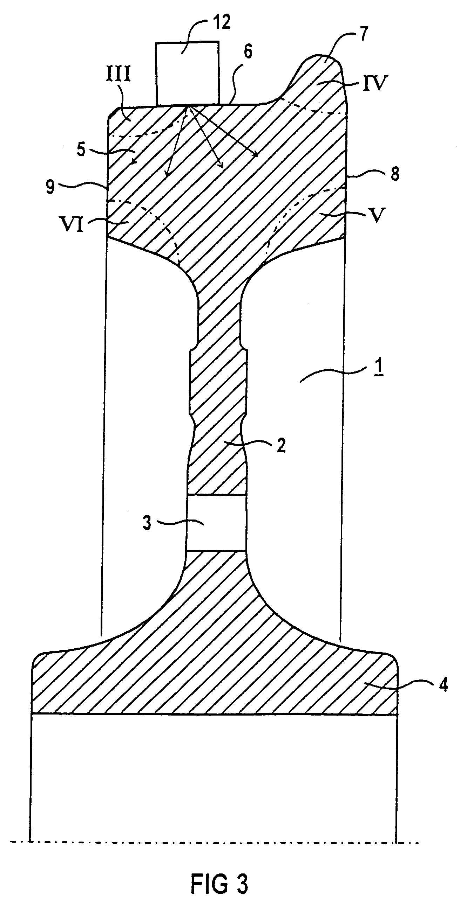

Bei der zweiten Variante werden die Ultraschall-Prüfsonden 11 und 12 im Bereich des Radkranzes 5 sowohl an der inneren Stirnfläche 8 des Radkranzes 5 (siehe FIG 2) als auch an der Lauffläche 6 des Schienenrades 1 (siehe FIG 3) angekoppelt. Nach der Ankopplung der Ultraschall-Prüfsonden 11 und 12 liegen diese formschlüssig an den betreffenden Oberflächen des Schienenrades 1 an.

Bei der Festlegung der optimalen Position der Ultraschall-Prüfsonden 10 bis 12 wird von der Geometrie des Schienenrades 1 im Fertigungszustand (Neuzustand) ausgegangen. Alle Prüfparameter gelten sowohl für den größten Durchmesser des Schienenrades 1 (Neuzustand) als auch für den kleinsten möglichen Durchmesser des Schienenrades 1 (abgenutzter Zustand). Es versteht sich weiterhin von selbst, daß die Oberflächenbeschaffenheit von im Betrieb befindlichen Schienenrädern nicht immer genau denen eines neuen oder eines reprofilierten Schienenrades entspricht, sondern daß in engen Toleranzen Abweichungen von den für die Konstruktion vorgegebenen Geometriedaten zulässig sind.

Der für die Radscheibe 2 gewünschte Prüfbereich wird bei der in FIG 1 dargestellten Anordnung der Ultraschall-Prüfsonden 10 dadurch erreicht, daß die beiden Prüfsonden 10 auf der Lauffläche des Schienenrades 1 im Bereich des Laufkreisdurchmessers in V-Durchschallung in einem Bogenmaßabstand von beispielsweise 350 mm angeordnet sind, um bei Ausnutzung des Winkelbereiches von 13° bis 45° für den Einschallwinkel den beschriebenen Prüfbereich abzudecken.

Durch einen speziellen Aufbau der Ultraschall-Prüfsonden 10 in Array-Technik und durch die elektronische Ansteuerung der einzelnen Schwingelemente innerhalb der Ultraschall-Prüfsonden 10 läßt sich das Ultraschallbündel vertikal in einem festgelegten Winkelbereich verschwenken, wodurch bei gleicher Anordnung der Ultraschall-Prüfsonden 10 durch die unterschiedlichen Einschallwinkel ein größerer Prüfbereich in der Radscheibe 2 abgedeckt wird.

Neben der Sender-Empfänger-Prüftechnik (die eine Ultraschall-Prüfsonde dient als Sender, die andere Ultraschall-Prüfsonde als Empfänger) werden die beiden gegeneinander angeordneten Ultraschall-Prüfsonden 10 für die unterschiedlichen Einschallwinkel auch in der Impuls-Echo-Prüftechnik (jede Ultraschall-Prüfsonde dient sowohl als Sender als auch als Empfänger) betrieben. Dadurch können in der Drehrichtung oder der dazu gegensinnigen Richtung weitere mögliche Fehler mit anderen Orientierungen nachgewiesen werden. Durch den Einsatz der Gruppenstrahlertechnik kann die Anzahl der erforderlichen Ultraschall-Prüfsonden und damit die Abmessungen des Prüfsystems minimiert werden.

Bei der zweiten Alternative wird zusätzlich zu den beiden Ultraschall-Prüfsonden 10 eine dritte Ultraschall-Prüfsonde 11 mit einem Einschallwinkel von 45° an der inneren Stirnfläche 8 des Radkranzes 5 geführt (siehe FIG 2). Die hauptsächliche Einschallung erfolgt in Umfangsrichtung. Ein elektronisches Verschwenken des durch Pfeile symbolisierten Schallfeldes, in diesem Fall in horizontaler Richtung, ermöglicht dabei die Abdeckung des gesamten Radkranzes 5. Diese Prüfung ist dahingehend optimiert, Querfehler im Bereich I, der hinter der inneren Stirnfläche 8 des Radkranzes 5 liegt, und im Bereich II, der hinter der äußeren Stirnfläche 9 des Radkranzes 5 liegt, nachzuweisen (siehe FIG 2).

Weiterhin ist bei der zweiten Alternative eine vierte Ultraschall-Prüfsonde 12 vorhanden, die ebenfalls einen 45°-Einschallwinkel aufweist und auf der Lauffläche 6 etwas außerhalb des Laufkreisdurchmessers angeordnet ist (siehe FIG 3). Das durch Pfeile symbolisierte Schallfeld der vierten Ultraschall-Prüfsonde 12 wird durch die elektronische Taktung der einzelnen Arrays ebenfalls horizontal verschwenkt, wodurch sowohl in direkter Einschallung im halben Sprungabstand als auch im ganzen Sprungabstand über die Umlenkung die in den FIG 3 skizzierten Randbereiche III bis VI erfaßt werden.

Mit den in FIG 1 bis 3 beschriebenen Anordnungen lassen sich damit alle interessierenden Bereiche des Schienenrades 1 untersuchen. Für die Prüfung der Radscheibe 2 kommen zwei Ultraschall-Prüfsonden 10 zum Einsatz, die in V-Position angeordnet sind. Die beiden Ultraschall-Prüfsonden 10 sind beispielsweise als Gruppenstrahlerprufköpfe mit variablem Einschallwinkel und einer Prüffrequenz von 2 Megahertz ausgeführt. Für die Prüfung des Radkranzes 5 ist die Ultraschall-Prüfsonde 11 als Array-Prüfkopf ausgebildet. Der Aufbau der Ultraschall-Prüfsonde 11 ermöglicht bei einem festen Einschallwinkel von 45° ein horizontales Verschwenken des Schallfeldes. Die Einschallung durch die Ultraschall-Prüfsonde 11 erfolgt von der inneren Stirnseite 8 des Radkranzes 5 aus. Für die Abdeckung der anderen Prüfbereiche des Radkranzes 5 ist die Ultraschall-Prüfsonde 12 ebenfalls als Array-Prüfkopf mit 45° Einschallwinkel ausgeführt. Bei der Ultraschall-Prüfsonde 12 ist ebenfalls ein horizontales Verschwenken des Schallfeldes möglich. Die Einschallung durch die Ultraschall-Prüfsonde 12 erfolgt an der Lauffläche 6 des Schienenrades 1.

Bei der Ultraschallprüfung gemäß der zweiten Variante sind die Ultraschall-Prüfsonden 10 bis 12 entsprechend einer vorteilhaften Ausgestaltung der erfindungsgernäßen Prüfeinrichtung in einem Prüfsondenträger (in den FIG 1 bis 3 nicht dargestellt) eingebaut, welcher mittels Rollen relativ zum prüfenden Schienenrad 1 in axialer und radialer Richtung geführt wird. Am Prüfsondenträger ist ein Positionsgeber mit Meßrad integriert, welcher von einem definierten Ausgangspunkt den aktuellen Verschiebeweg der Ultraschall-Prüfsonden 10 bis 12 als Meßgröße weiterleitet. Die Halterungen der Ultraschall-Prüfsonden 10 bis 12 gewährleisten durch ihren Federweg, daß die Ultraschall-Prüfsonden 10 bis 12 unabhängig vom Raddurchmesser und Radverschleiß gleichmäßig an der meßtechnisch zugeordneten Oberfläche formschlüssig anliegen und somit eine optimale Ankopplung der Ultraschall-Prüfsonden 10 bis 12 gegeben ist. Die optimale Ankopplung der Ultraschall-Prüfsonden 10 bis 12 wird mittels Fließwassers sichergestellt, welches zwischen die Oberfläche des Schienenrades 1 und den Ultraschall-Prüfsonden 10 bis 12 gepreßt wird. Das unterhalb des Schienenrades 1 ablaufende Wasser wird aufgefangen und wieder zurückgeführt. Die Federung der Ultraschall-Prüfsonden 10 bis 12 ist so gestaltet, daß die Position der Ultraschall-Prüfsonden 10 bis 12 in bezug zur Prüfspur beibehalten wird.

Der in den FIG 1 bis 3 nicht dargestellte Schlitten ist so konstruiert, daß er an alle Spurbreiten und die meisten Schienenbefestigungssysteme angepaßt werden kann. Der Schlitten der Prüfeinrichtung wird in die Schiene eingehängt und im Schienenfuß bis zu dem Radpaar (Radsatz) verfahren, das geprüft werden soll. Alternativ zu einer Einhängung im Schienenfuß kann der Schlitten auch auf einem Hubtisch verfahren werden und erst unter dem zu prüfenden Radpaar in die Schiene eingehängt werden.

In vorteilhafter Weise können die beiden anderen Prüfkomponenten der bekannten Radsatzdiagnose, nämlich das Lichtschnittverfahren und das Meßbalkenverfahren, in leicht modifizierter Ausführung ohne große Anpassungsmaßnahmen bei deutlich besserer Prüfaussage ebenfalls mit der erfindungsgemäßen Prüfeinrichtung kombiniert werden. So ist es beispielsweise einfacher und technisch leichter umsetzbar, durch Anwendung optischer Prüfverfahren die Unrundheit eines Rades zu messen.

## Patentansprüche

1. Prüfeinrichtung für Schienenräder, die folgende Merkmale umfaßt:
a) Einen Schlitten, der unter einem zu prüfenden Schienenfahrzeug verschiebbar ist und der eine Radfreidreheinrichtung aufweist,
b) wenigstens ein Prüfsystem mit einer vorgebbaren Anzahl von Prüfsonden (10 - 12), die als Sender von Prüfsignalen und/oder als Empfänger von Meßsignalen ausgebildet sind, wobei zumindest eine Prüfsonde (10 - 12) wenigstens einer Oberfläche des Schienenrades (1) meßtechnisch zugeordnet ist,
c) wenigstens eine Leistungsverstärkereinheit zur Erzeugung der Prüfsignale und
d) wenigstens eine Auswerteeinheit, der die Meßsignale zur Auswertung zuführbar sind.

2. Prüfeinrichtung nach Anspruch 1, die folgendes Merkmal umfaßt:
b1) Das Prüfsystem weist wenigstens eine Ultraschall-Prüfsonde auf.

3. Prüfeinrichtung nach Anspruch 1 oder 2, die folgendes Merkmal umfaßt:
b2) Das Prüfsystem weist wenigstens eine optische Prüfsonde auf.

4. Prüfeinrichtung nach einem der Ansprüche 1 bis 3, die folgendes Merkmal umfaßt:
b3) Das Prüfsystem weist wenigstens eine induktive Prüfsonde auf.

5. Prüfeinrichtung nach einem der Ansprüche 1 bis 3, die folgende Merkmale umfaßt:
b4) Die Prüfsonden (10 - 12) sind in einem gemeinsamen Prüfsondenträger angeordnet, wobei
b5) die Prüfsonden (10 - 12) vorzugsweise kardanisch im Prüfsondenträger gelagert sind.

6. Prüfeinrichtung nach Anspruch 2, die folgendes Merkmal umfaßt:
b6) Das Prüfsystem weist zwei Ultraschall-Prüfsonden (10) auf, die bei der Durchführung der Ultraschallprüfung formschlüssig an der Lauffläche (6) des Schienenrades (1) anliegen und in einem vorgebbaren Bogenmaß voneinander beabstandet sind.

7. Prüfeinrichtung nach Anspruch 2, die folgendes Merkmal umfaßt:
b7) Das Prüfsystem weist eine Ultraschall-Prüfsonde (1s) auf, die bei der Durchführung der Ultraschallprüfung formschlüssig an der inneren Stirnfläche des Radkranzes (5) des Schienenrades (1) anliegt.

8. Prüfeinrichtung nach Anspruch 2, die folgendes Merkmal umfaßt:
b8) Das Prüfsystem weist eine Ultraschall-Prüfsonde (12) auf, die bei der Durchführung der Ultraschallprüfung formschlüssig an der Lauffläche (6) des Schienenrades (1), vorzugsweise etwas außerhalb des Laufkreisdurchmessers, anliegt.
